# EUROPEAN PATENT SPECIFICATION

(11) **EP 1 223 074 B1**
(45) Date of publication and mention of the grant of the patent: **26.10.2005**
(21) Application number: 01100675.6
(22) Date of filing: 11.01.2001
(51) Int. Cl.: B60N 2/28, B62J 1/16

(54) **Support structure for a child seat for a bicycle**
Unterbau für einen Kindersitz für ein Fahrrad
Structure de support d'un siège d'enfants pour une bicyclette

(43) Date of publication of application: 17.07.2002
(73) Proprietor: HAMAX AS, 1679 Krakeroy (NO)
(72) Inventor: Hermansen, Leif, 1675 Krakeroy (NO); Hoidal, Dag, 1675 Krakeroy (NO)
(74) Representative: Popp, Eugen

(56) References cited:
- US-A- 4 621 004
- US-A- 4 885 200
- US-A- 5 228 745
- US-A- 5 829 829

## Description

This invention relates to a child seat for mounting on a vehicle. Particularly, the invention relates to a support structure for a child seat for a bicycle and more particularly, the support structure comprises a series of inserts of at least two in number of different sizes for adaption for children of different sizes. The invention also relates to a support structure which can be adjusted to change the inner lateral dimensions of the child seat.

A most important attribute of the use of a baby seat for mounting on a bicycle is the safe securement of a baby during travel on a bicycle. When cycling, or in the event of any sudden temporary translational or rotational aberration in cycling which may occur, for example by road surface or bumping into an obstacle/another cyclist, the cyclist must feel assured that the baby will be held in place in the baby seat and not topple over.

It is known (see e.g. US-A-5 228 745 and US-A-5 829 829) to provide a support structure which conforms to the contour of a back rest and bottom seat portion of a child seat. However, such conventional devices inadequately secure the child in place during travel on a bicycle. Moreover, these devices fail to address significant attributes necessary for the safety of the child in a child seat mounted on a bicycle. There is a significant amount of free space available between the child, when placed in the child seat, and the seat. This creates an insecure environment since the child may easily move from side to side within the seat and create instability. In conventional devices the parent resorts to the use of cushions, towels or blankets which is wholly inadequate. Thus in the event of an accident the child may easily topple from the child seat without proper security.

Furthermore, it is important to provide adequate cushioning to the child seat. Conventional child seats lack the necessary shock absorption to cushion the ride. This is particularly important for children in their developing ages and to provide the correct support for avoiding damage to the child's upper torso.

The present invention seeks to provide a support structure having a series of inserts for a seat for a child. The seat can be mounted inside the back seat of cars, trucks, motorcycles, in buses, in planes and other vehicles that need to transport children, with more safety, comfort and versatility. This support structure can be used for children of about a few months of age up until about 6 years old and preferably between the ages of 1 and 2 years.

The support structure of the present invention has a number of further advantages. The present invention provides a series of inserts which progressively change in size to accommodate children of different sizes. When a child outgrows a particular size insert, the insert may simply be replaced by a different size insert to accommodate a larger child. Alternatively, a universal insert for all sizes may be adjusted to accommodate children of different sizes.

Further, the present invention provides the necessary cushioning support for the secure hold of a child travelling in a child seat on a bicycle. The cyclist can rest assured that the child will not fall out of the seat. The support structure provides improved support for the child's torso thus avoiding any negative consequences for the vertebra of the neck and back. It is also important to stabilise the child's head which may fall forward or sideways during cycling. The present invention enables the child to be securely locked into place and the use of the support structure takes care of shock absorption to cushion the ride. Moreover, the child is able to enjoy a more comfortable ride when securely positioned among cushioning material within the seat.

According to the present invention, support structures for a child seat are provided as defined in claims 1 and 2. Embodiments of the support structure are defined in the dependent claims.

The present invention relates a structure for a child seat for a bicycle wherein the support structure conforms essentially to the contours of a back rest, bottom seat and foot portions of the shell of the child seat. In particular, the support structure comprises a series of inserts of at least two in number, a first insert and a second insert, of different sizes for adaption of children of different sizes. The simple insertion of different sized inserts to accommodate different sized children can be performed rapidly without much difficulty and ease of maneuverability.

The support structure may also comprise a universal support comprising at least two inserts wherein the size of the insert when mounted on the child seat can be adjusted so as to change space availability for the baby within the shell, in particular the inner lateral dimensions of the shell of the child seat. The use of a universal insert is advantageous in that one only need buy a single insert which can be adapted for children of different ages.

The first insert conforms to the contours of a back rest, a bottom seat and foot portions of the shell and the second insert essentially partially overlays the first insert. The first insert comprises padding or upholstery material for covering the shell of the child seat.

The second insert comprises a back rest second insert portion and a bottom rest second insert portion. The back rest second insert portion and the bottom rest second insert portion comprise a plurality of inwardly bulged structures having surfaces particularly directed away from the shell. The bulged surfaces can form ribbed outer surfaces. The bulged structures may be preformulated or preshaped prior to mounting in the shell in a form which conforms to being positioned within the shell.

The back rest second insert portion having a plurality of bulges comprise at least two side supporting upper bulges, and at least one upper middle bulge which form a recess. The bottom rest second insert portion having a plurality of bulges comprise at least two side supporting lower bulges and at least one lower middle bulge which form a recess. The number of bulges comprising the upper and lower middle bulges are particularly three, respectively. The recesses are othogonally centered.

The first and second inserts can be interlocked in an unmounted or mounted position. In the mounted position, where the first and second inserts are interlocked into place in the shell, this interlocking serves to stabilise the first and second inserts further into place in the shell. This interlocking can be achieved by the upper first insert portion protruding or resting through the recess of the back rest second insert portion and the recess of the bottom rest second insert portion overlaying the lower first insert portion. Further, upper and lower middle bulges of the second insert overlay the upper and lower first insert middle portions of the first insert. The plurality of bulges when positioned as such generate a synergic spring action effect when first and second inserts are interlocked.

The bulges are filled with packing material such as polystyrene or the bulged structures comprise expandable bags which can be inflated particularly be air. The bulged structures can be in fluid communication. Alternatively, the bulged structures are secured together using a fixing means wherein the fixing means comprises stitching, sticking such as with the use of velcro, or mechanical means such as with the use of press buttons, springs, zippers or hook-eye attachments.

The second insert can be adjusted in size by operating the fixing means such that the height of the side supporting bulges in the backrest second insert portion is adjustable relative to bottom rest second insert portion. The second insert can be adjusted in size by operating the fixing means such that the width of the middle bulges is adjustable relative to the side supporting bulges. The second insert can be adjusted in size by operating the fixing means such that the length of the side supporting bulges is adjustable relative to the backrest second insert portion. The first insert can be adjusted to conform to the adjustable second insert so that upper first insert portion, upper and lower first middle portions and lower first insert are all relatively adjustable to each other.

A method of adjusting the size of an second insert partially overlaying a first insert positioned on a shell of a child seat by adjusting the height, width and length of side supporting bulges and middle bulge portions, respectively, and simultaneously thereby also adjusting the first insert by relatively adjusting the upper, middle and lower portions thereto to conform to the adjustments of the second insert.

The invention will now be described by way of example and with reference to the accompanying drawings in which are shown in:
- Figure 1a:: a perspective view of child seat for a bicycle with first and second inserts mounted in the child seat;
- Figure 1b:: a perspective view of the first insert unmounted;
- Figure 1c:: a perspective view of the second insert unmounted;
- Figure 2a:: a cross sectional view along the line A-A' shown in Figure 1a; and
- Figure 2b:: a cross sectional view along the line B-B' shown in Figure 1a.

Figure 1a shows a perspective view of a child seat for a vehicle and particularly for a bicycle. The child seat (1) comprises a shell (4) having a back rest portion (5), bottom seat portion (6) and foot portion (7). The child seat has a lateral dimension of the shell, for example, the distance between one side arm resting portion to the other across the bottom seat portions portion (6) or from back to front.

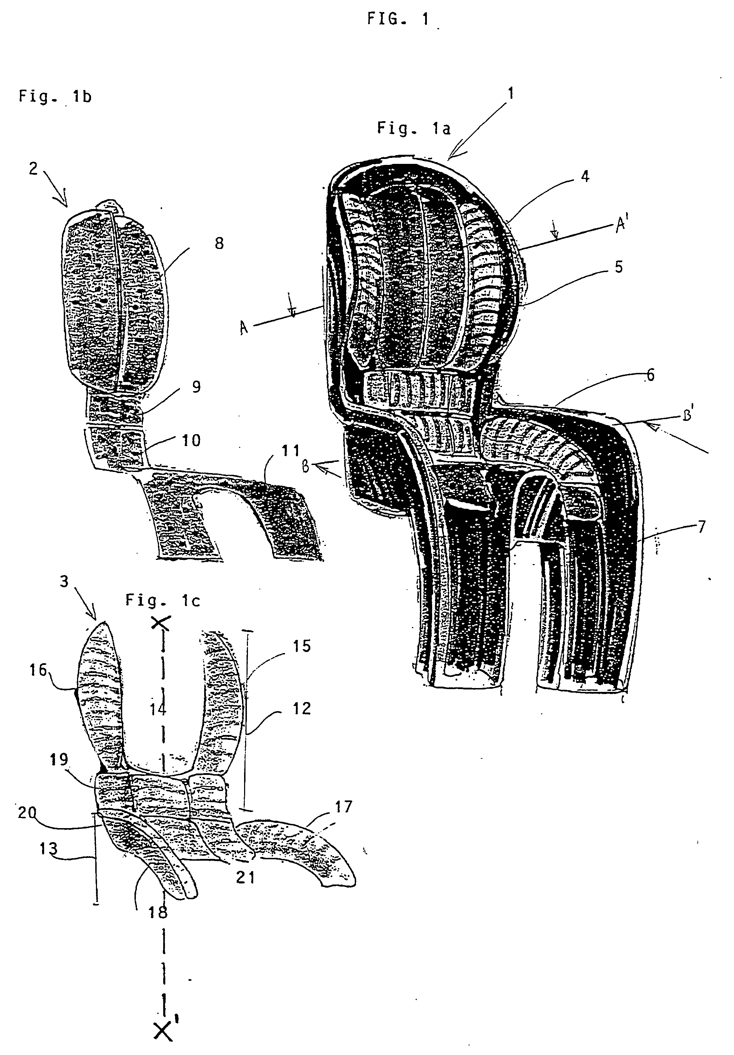

A first insert (2) and second insert (3) are also shown in Figure 1 and are mounted in the child seat (1) to provide support for a child resting therein. Any number of inserts may be inserted into the child seat (1) to gradually upgrade the support structure for children of different sizes. One insert by itself may be inserted or a series of inserts essentially overlaying one another. The series of inserts when aligned to be essentially overlaying can be configured to change the space available for the baby within the shell, in particular, the lateral dimensions of the shell (4). This adjustment in the inner dimensions of the shell can accommodate children of different sizes. For the use of a universal support structure, the size of the insert may also be adjusted to conform to children of different sizes.

Inserts may be preconfigured or preshaped prior to mounting in the shell (4) in a form which conforms to being positioned within the shell (4). Preshaping may take the form of bulge structures which define predetermined shapes prior to mounting in the shell of the baby seat (1). The predetermined shapes may come in one size or a series of different sizes.

Figure 1b shows a first insert (2) in an unmounted position comprising an upper first insert portion (8), upper and lower first insert middle portions (9, 10) and a lower first insert portion (11). The upper first insert portion (8) comprises at least one bulged structure, and preferably at least two, which may be preshaped. The first insert is shown symmetrical along a longitudinal central axis. The upper first insert portion (8) essentially extends in the same direction as the upper and lower first insert middle portions (9, 10). Upper first insert portion, upper first insert middle portion, lower first insert middle portion form a plane which is essentially at a 90° angle with respect to the plane of the seat portion and the plane of the seat portion is essentially at a 90° angle with respect to the plane of the lower first insert portion (11).

In the mounted position, the first insert (2) conforms to the contours of the back rest (5), a bottom seat (6) and foot portions (7) of the shell (4). The first insert may be filled with padding or packing material such as polystyrene; it may also be inflated by a fluid, such as air, by the use of expandable bags. The first insert may comprise standard upholstery and have an outer surface which is ribbed or has stiffening elements incorporated therein. The outer surfaces may also be spot united, for example, where the outer surfaces come together at random spots and are joined by, e.g., heating.

Figure 1c shows a second insert (3) in an unmounted position comprising a back rest second insert portion (12) and a bottom rest second insert portion (13) which comprise a plurality of bulged structures which are outwardly bulged in a direction away from the shell (4). The bulged structures have outer surfaces which are, in particular, ribbed or may comprise stiffening elements incorporated therein. The bulged structures may be preconfigured or preshaped as described above. The back rest second insert portion (12) comprises at least two side supporting upper bulges (15, 16) and at least one upper middle bulge (19), and preferably three, which side supporting and middle bulges together preferably form a first recess (14). The bottom rest second insert portion (13) comprises at least two side supporting lower bulges (17, 18) and at least one lower middle bulge (20), and preferably three, which side supporting and middle bulges together preferably form a second recess (21). The second insert is shown symmetrical along a central longitudinal axis (X-X'). The back rest second insert portion (12) forms a plane which is essentially at an angle of about 90° with respect to the plane of the bottom rest second insert portion (13). The side supporting upper and lower bulges (15, 16, 17, 18) can also be used without the use of the upper and lower middle bulges (19, 20).

The bulged structures of the second insert may be filled with suitable packing or padding material such as polystyrene or may comprise of expandable bags which can be inflated preferably by air. The individual bulged structures can be in fluid communication with each other, for example between adjacent expandable bags. Alternatively, a fixing means enables the bulged structures of the first and second inserts (2, 3) to be secured together. The fixing means comprises stitching such as machining, sticking such as with the use of velcro, or mechanical means such as with the use of press buttons, springs, zippers or hook-eye attachments.

In the mounted position as shown in Figure 1a, the second insert (3) essentially rests or protrudes on top of the first insert (2), and preferably partially overlays the first insert (2) such that the upper first insert portion (8) rests upon or protrudes through the recess (14) of the back rest second insert portion (12) and the upper, lower and middle bulges (19, 20) and bottom rest second insert portions (13) overlay the upper and lower first insert middle portions (9, 10), and lower first insert portion (11), respectively.

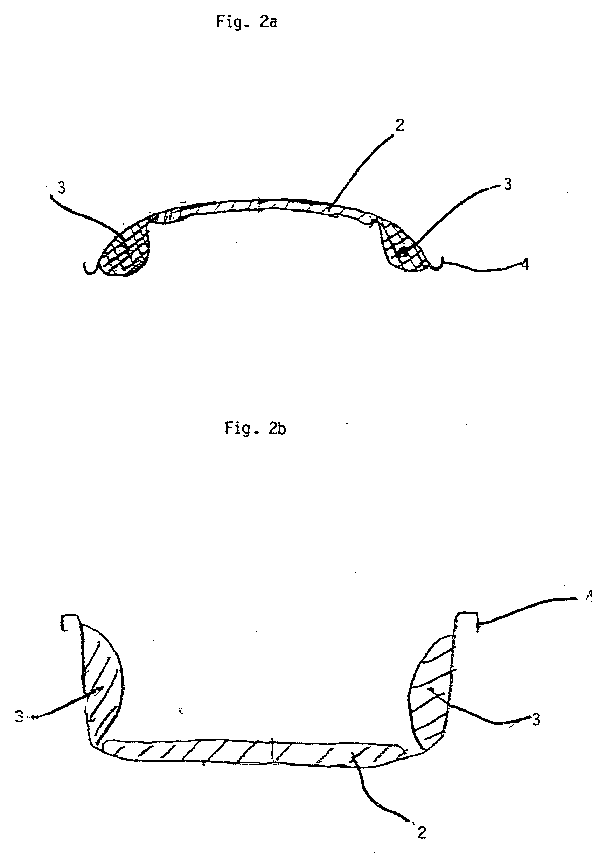

Figures 2a and 2b show cross-sectional views along the lines A-A' and B-B' depicted in Figure 1a, respectively, and serve to further illustrate the partial overlay of the first and second insert with respect to the shell.

The second insert (3) may also be intertwined or interlocked with the first insert (2) to form a mutually stabilized unitary structure. This can be achieved by the locking into place of the upper first insert portion (8) into the recess (14) of the back rest second insert portion (12) and/or the locking into place of the lower first insert portion (11) into recess (21) of the bottom rest second insert portion (13) in a back to front or front to back manner. The resulting unitary structure may then be mounted into the shell (4) of the child seat (1) by the use of a suitable mounting means. Such a mounting means serves to improve the interlocking capabilities of the first and second inserts. The use of bulged surfaces to provide interlocking is particularly advantageous since the bulged structures when respectively positioned provide a springing action to synergistically lock in place the unitary structure into the shell.

A further number of inserts can be mounted in succession to the first and second inserts (2, 3) to form a series of inserts conformable to the size of the child. For example, a third insert may be mounted on the second insert which rests in other recesses (not shown) formed by the first and second inserts. The series of inserts progressively decrease the space available within the lateral dimension of the shell (4) of the child seat (1). Each insert can be fixed at the same place in the shell (4) and be replaced with one of a different size when necessitated.

The inserts as described above can be made adjustable. The second embodiment of the present invention comprises a single or series of inserts whose sides can be adjusted either in the mounted or unmounted position so that the space available for the baby within the shell, for example, the inner lateral dimension of the shell (4) is increased as the child grows.

In the operation of the support structure, adjustment may take place by simply replacing different sized inserts into a fixed position in the shell (4). Alternatively, in the case of a universal support structure adjustment may take place by adding or removing fluid, particularly air, from the expandable or inflatable bags or by operating the fixing means such that the respective insert portions are all adjustable in height, width and length relative to each other. For example, the spacing of the bulged structures may be varied by changing the positions of the velcro attachment. The adjustment may also take place by a translational movement of the bulged structures so that the bulged structures are moved away from or towards the longitudinal centre line X-X' shown in Fig. 1c.

The second insert can be adjusted in size by operating the fixing means such that the height of the side supporting bulges (15, 16) in the back rest second insert portion (12) is adjustable relative to the bottom rest second insert portion (13). The second insert (3) can be adjusted in size by operating the fixing means such that the length of the side supporting bulges (17, 18) is adjustable relative to the back rest second insert portion (12).

The second insert can be adjusted in size by operating the fixing means such the width of the middle bulges (19, 20) is adjustable relative to the side supporting bulges (15, 16, 17, 18). In this case, the side supporting upper and lower bulges can be moved away from or towards the center line X-X'. Alternatively, the side supporting upper and lower bulges (15, 16, 17, 18) can be fixed at the same place in the shell (4) and then the four individual bulges (15, 16, 17, 18) can simply be replaced by ones of different sizes.

The present invention also relates to a method of adjusting the size of a second insert (3) partially overlaying the first insert (2) positioned on a shell (4) of a child seat (1) by adjusting the height, width and length of side supporting bulges (15, 16, 17, 18) and middle bulge portions (19, 20) respectively and simultaneously thereby also adjusting the first insert (2) by relatively adjusting the upper (8), middle (9, 10) and lower portions (11) thereto to conform to the adjustment of the second insert (3).

While various features and embodiments of the invention are described above, they can readily be combined with each other resulting in further embodiments of the invention.

## Claims

1. A support structure for a child seat (1) for a bicycle wherein the support structure conforms to the contours of a back rest (5) and bottom seat (6) portions of the shell (4) of the child seat (1)
**characterised in that**
the support structure comprises a series of inserts of at least two in number, a first insert (2) and a second insert (3), of different sizes for adaption of children of different sizes.

2. A support structure for a child seat (1) for a bicycle wherein the support structure conforms to the contours of a back rest (5) and a bottom seat (6) portions of the shell (4) of the child seat (1)
**characterised in that**
the support structure comprises an insert wherein the size of the insert when mounted on the child seat (1) can be adjusted so as to change space availability for the baby within the shell, in particular the inner lateral dimensions of the shell (4) of the child seat (1); and
wherein the insert comprises at least two inserts, a first insert (2) and a second insert (3).

3. The support structure of claims 1 and 2, wherein the first insert (2) conforms to the contours of a back rest (5), a bottom seat (6) and foot portions (7) of the shell (4) and the second insert (3) partially overlays the first insert (2).

4. The support structure of claims 1, 2 or 3, wherein the first (2) and second (3) inserts are interlocking so as to stabilise the first and second inserts (2, 3) into place in the shell (4).

5. The support structure of claims 1, 2, 3 or 4, wherein the first insert (2) comprises padding material for covering the shell (4) of the child seat (1).

6. The support structure of claims 1, 2, 3 or 4, wherein the second insert (3) comprises a back rest second insert portion (12)and a bottom rest second insert portion (13).

7. The support structure of claim 6 wherein the back rest second insert portion (12) and the bottom rest second insert portion (13) comprise a plurality of inwardly bulged structures having surfaces directed away from the shell (4).

8. The support structure of claim 7, wherein the bulged surfaces form ribbed outer surfaces.

9. The support structure of claim 7, wherein the bulged structures are preshaped prior to mounting in the shell (3) in a form which conforms to being positioned within the shell (4).

10. The support structure of claims 7 to 9, wherein the back rest second insert portion (12) having a plurality of bulges comprises at least two side supporting upper bulges (15, 16), and at least one upper middle bulge (19) which forms a recess (14).

11. The support structure of claims 7 to 9, wherein the bottom rest second insert portion (13) having a plurality of bulges comprises at least two side supporting lower bulges (17, 18) and at least one lower middle bulge (20) which forms a recess (21).

12. The support structure of claims 10 and 11, wherein the number of bulges comprising the upper and lower middle bulges (19, 20) are three, respectively.

13. The support structure of claims 10 to 12, wherein recesses (14, 21) are centered on surfaces which are essentially orthogonal.

14. The support structure of claims 10 to 13, wherein the upper first insert portion (8) protrudes through the recess (14) and the recess (21) of the bottom rest second insert portion (13) overlays the lower first insert portion (11)

15. The support structure of claim 14, wherein the plurality of bulges provide a spring action to sustain tension when first and second inserts (2, 3) are interlocked.

16. The support structure of claims 7 to 11, wherein the bulges are supplied with packing material such as polystyrene or the bulged structures comprise expandable bags which can be inflated.

17. The support structure of claims 7 to 16, wherein the bulged structures are in fluid communication.

18. The support structure of claims 7 to 17, wherein the bulged structures are secured together using a fixing means.

19. The support structure of claim 18, wherein the fixing means comprises stitching, sticking such as with the use of velcro, or mechanical means such as with the use of press buttons, springs, zippers or hook-eye attachments.

20. The support structure of claim 10, wherein when the first and second inserts (2, 3) are mounted in the child seat (1), the upper first insert portion (8) rests in the recess (14) of the backrest second insert portion (12) to interlock the respective portions, and the at least one upper middle bulge (19) overlays the upper first insert middle portion (9).

21. The support structure of claim 11, wherein when the first and second inserts (2, 3) are mounted in the child seat (1), the bottom rest second insert portion (13) rests on the lower first insert portion (11), and the at least one lower middle bulge (20) overlays a lower first insert middle portion (10).

22. The support structure of claims 18 to 21, wherein the second insert (3) can be adjusted in size by operating the fixing means such that the height of the side supporting bulges (15, 16) in the back rest second insert portion (12) is adjustable relative to bottom rest second insert portion (13).

23. The support structure of claims 18 to 21, wherein the second insert (3) can be adjusted in size by operating the fixing means such that the width of the middle bulges (19, 20) is adjustable relative to the side supporting bulges (15, 16, 17, 18).

24. The support structure of claims 18 to 23, wherein the second insert (3) can be adjusted in size by operating the fixing means such that the length of the side supporting bulges (17, 18) is adjustable relative to the back rest second insert portion (12).

25. The support structure of claims 11 to 24, wherein the first insert (2) can be adjusted to conform to the adjustable second insert (3) so that upper first insert portion (8), upper and lower first middle portions (19,20) and lower first insert (11) are all relatively adjustable to each other.

26. A method of adjusting the size of an second insert (3) partially overlaying a first insert (2) positioned on a shell (4) of a child seat (1) by adjusting the height, width and length of side supporting bulges (15, 16, 17, 18) and middle bulge portions (19, 20) respectively and simultaneously thereby also adjusting the first insert (2) by relatively adjusting the upper (8), middle (9,10) and lower portions (11) thereto to conform to the adjustments of the second insert (3).

## Patentansprüche

1. Halterungsaufbau für einen Kindersitz (1) für ein Fahrrad, wobei der Halterungsaufbau den Umrissen der Abschnitte einer Rückenlehne (5) und Sitzfläche (6) der Schale (4) des Kindersitzes (1) angepasst ist,
**dadurch gekennzeichnet, dass**
der Halterungsaufbau eine Reihe von mindestens zwei Einsätzen, einem ersten Einsatz (2) und einem zweiten Einsatz (3) umfasst, die unterschiedlich groß sind, um sich Kindern unterschiedlicher Größen anzupassen.

2. Halterungsaufbau für einen Kindersitz (1) für ein Fahrrad, wobei der Halterungsaufbau den Umrissen der Abschnitte einer Rückenlehne (5) und Sitzfläche (6) der Schale (4) des Kindersitzes (1) angepasst ist,
**dadurch gekennzeichnet, dass**
der Halterungsaufbau einen Einsatz umfasst, wobei die Größe des Einsatzes, wenn er am Kindersitz (1) angerbacht ist, so eingestellt werden kann, dass die Platzverfügbarkeit für das Kleinkind in der Schale, insbesondere die inneren Seitenabmessungen der Schale (4) des Kindersitzes (1) eingestellt werden können; und
wobei der Einsatz mindestens zwei Einsätze umfasst, einen ersten Einsatz (2) und einen zweiten Einsatz (3).

3. Halterungsaufbau nach Anspruch 1 und 2, wobei der erste Einsatz (2) den Umrissen einer Rückenlehne (5), einer Sitzfläche (6) und Fußabschnitten (7) der Schale (4) angepasst ist, und der zweite Einsatz (3) den ersten Einsatz (2) teilweise überlagert.

4. Halterungsaufbau nach Anspruch 1, 2 oder 3, wobei der erste (2) und zweite (3) Einsatz sich formschlüssig verbinden, um den ersten und zweiten Einsatz (2, 3) in der Schale (4) an der Stelle lagefest zu machen.

5. Halterungsaufbau nach Anspruch 1, 2 , 3 oder 4, wobei der erste Einsatz (2) ein Polstermaterial umfasst, um die Schale (4) des Kindersitzes (1) abzudecken.

6. Halterungsaufbau nach Anspruch 1, 2, 3 oder 4, wobei der zweite Einsatz (3) einen zweiten Rückenlehneneinsatzabschnitt (12) und einen zweiten Sitzflächeneinsatzabschnitt (13) umfasst.

7. Halterungsaufbau nach Anspruch 6, wobei der zweite Rückenlehneneinsatzabschnitt (12) und der zweite Sitzflächeneinsatzabschnitt (13) mehrere nach innen ausgebauchte Strukturen mit Flächen aufweisen, die von der Schale (4) weg gerichtet sind.

8. Halterungsaufbau nach Anspruch 7, wobei die ausgebauchten Flächen gerippte Außenflächen bilden.

9. Halterungsaufbau nach Anspruch 7, wobei die ausgebauchten Strukturen vor der Anbringung in der Schale (4) in einer Form vorgeformt werden, die sich anpasst, um in der Schale (4) angeordnet zu werden.

10. Halterungsaufbau nach den Ansprüchen 7 bis 9, wobei der zweite Rückenlehneneinsatzabschnitt (12) mit mehreren Ausbauchungen mindestens zwei obere Seitenstützausbauchungen (15, 16) und mindestens eine obere Mittelausbauchung (19) umfasst, die eine Ausnehmung (14) bildet.

11. Halterungsaufbau nach den Ansprüchen 7 bis 9, wobei der zweite Sitzflächeneinsatzabschnitt (13) mit mehreren Ausbauchungen mindestens zwei untere Seitenstützausbauchungen (17, 18) und mindestens eine untere Mittelausbauchung (20) umfasst, die eine Ausnehmung (21) bildet.

12. Halterungsaufbau nach den Ansprüchen 10 und 11, wobei es sich bei der Anzahl der Ausbauchungen, die die obere und untere Mittelausbauchung (19, 20) umfassen, jeweils um drei handelt.

13. Halterungsaufbau nach den Ansprüchen 10 bis 12, wobei die Ausnehmungen (14, 21) an Flächen zentriert sind, die im Wesentlichen orthogonal sind.

14. Halterungsaufbau nach den Ansprüchen 10 bis 13, wobei der obere erste Einsatzabschnitt (8) durch die Ausnehmung (14) vorsteht, und die Ausnehmung (21) des zweiten Sitzflächeneinsatzabschnitts (13) den unteren ersten Einsatzabschnitt (11) überlagert.

15. Halterungsaufbau nach Anspruch 14, wobei die mehreren Ausbauchungen eine Federwirkung bereitstellen, um Spannung zu halten, wenn der erste und zweite Einsatz (2, 3) sich formschlüssig verbinden.

16. Halterungsaufbau nach den Ansprüchen 7 bis 11, wobei die Ausbauchungen mit Füllmaterial wie Polystyrol versehen sind oder die ausgebauchten Strukturen dehnbare Taschen umfassen, die aufgeblasen werden können.

17. Halterungsaufbau nach den Ansprüchen 7 bis 16, wobei die ausgebauchten Strukturen in Fluidverbindung stehen.

18. Halterungsaufbau nach den Ansprüchen 7 bis 17, wobei die ausgebauchten Strukturen unter Verwendung eines Befestigungsmittels aneinander befestigt sind.

19. Halterungsaufbau nach Anspruch 18, wobei das Befestigungsmittel Annähen, Anhaften wie durch die Verwendung einer Klettverbindung, oder ein mechanisches Mittel wie durch die Verwendung von Druckknöpfen, Federn, Reißverschlüssen oder Haken-/Ösenbefestigungen umfasst.

20. Halterungsaufbau nach Anspruch 10, wobei, wenn der erste und zweite Einsatz (2, 3) im Kindersitz (1) angebracht sind, der obere erste Einsatzabschnitt (8) in der Ausnehmung (14) des zweiten Rückenlehneneinsatzabschnitts (12) zu liegen kommt, um die jeweiligen Abschnitte formschlüssig zu verbinden, und die mindestens eine obere Mittelausbauchung (19) den oberen Mittelabschnitt (9) des ersten Einsatzes überlagert.

21. Halterungsaufbau nach Anspruch 11, wobei, wenn der erste und zweite Einsatz (2, 3) im Kindersitz (1) angebracht sind, der zweite Sitzflächeneinsatzabschnitt (13) am unteren ersten Einsatzabschnitt (11) zu liegen kommt, und die mindestens eine untere Mittelausbauchung (20) einen unteren Mittelabschnitt (10) des ersten Einsatzes überlagert.

22. Halterungsaufbau nach den Ansprüchen 18 bis 21, wobei der zweite Einsatz (3) in der Größe eingestellt werden kann, indem das Befestigungsmittel so betätigt wird, dass die Höhe der Seitenstützausbauchungen (15, 16) im zweiten Rückenlehneneinsatzabschnitt (12) bezüglich des zweiten Sitzflächeneinsatzabschnitts (13) eingestellt werden kann.

23. Halterungsaufbau nach den Ansprüchen 18 bis 21, wobei der zweite Einsatz (3) in der Größe eingestellt werden kann, indem das Befestigungsmittel so betätigt wird, dass die Breite der Mittelausbauchungen (19, 20) bezüglich der Seitenstützausbauchungen (15, 16, 17, 18) eingestellt werden kann.

24. Halterungsaufbau nach den Ansprüchen 18 bis 23, wobei der zweite Einsatz (3) in der Größe eingestellt werden kann, indem das Befestigungsmittel so betätigt wird, dass die Länge der Seitenstützausbauchungen (17, 18) bezüglich des zweiten Rückenlehneneinsatzabschnitts (12) eingestellt werden kann.

25. Halterungsaufbau nach den Ansprüchen 18 bis 24, wobei der erste Einsatz (2) so eingestellt werden kann, dass er sich dem einstellbaren zweiten Einsatz (3) so anpasst, dass der obere erste Einsatzabschnitt (8), der obere und untere erste Mittelabschnitt (19, 20) und der untere erste Einsatz (11) alle bezüglich aufeinander eingestellt werden können.

26. Verfahren zum Einstellen der Größe eines zweiten Einsatzes (3), der teilweise einen ersten Einsatz (2) überlagert, der an einer Schale (4) eines Kindersitzes angebracht ist, indem die Höhe, Breite und Länge von Seitenstützausbauchungen (15, 16, 17, 18) und Mittelausbauchungsabschnitten (19, 20) jeweils und gleichzeitig eingestellt werden, wodurch auch der erste Einsatz (2) eingestellt wird, indem bezüglich zu diesen der obere Abschnitt (8), die mittleren Abschnitte (9, 10) und der untere Abschnitt (11) eingestellt werden, um sich den Einstellungen des zweiten Einsatzes (3) anzupassen.

## Revendications

1. Structure de support pour un siège d'enfant (1) pour une bicyclette, dans laquelle la structure de support se conforme aux contours de parties appui-dos (5) et siège inférieur (6) de la coquille (4) du siège d'enfant (1)
**caractérisée en ce que**
la structure support comprend une série d'inserts d'au moins deux en nombre, un premier insert (2) et un deuxième insert (3) de différentes tailles pour l'adaptation à des enfants de différentes tailles.

2. Structure de support pour un siège d'enfant (1) pour une bicyclette, dans laquelle la structure de support se conforme aux contours de parties appui-dos (5) et siège inférieur (6) de la coquille (4) du siège d'enfant (1)
**caractérisée en ce que**
la structure support comprend un insert, dans laquelle la taille de l'insert lorsqu'il est monté sur le siège d'enfant (1) peut être ajustée de façon à changer la disponibilité d'espace pour le bébé dans la coquille, en particulier les dimensions latérales intérieures de la coquille (4) du siège d'enfant (1) ; et
dans laquelle l'insert comprend au moins deux inserts, un premier insert (2) et un deuxième insert (3).

3. Structure de support selon les revendications 1 et 2, dans laquelle le premier insert (2) se conforme aux contours de parties appui-dos (5), siège inférieur (6) et pieds (7) de la coquille (4) et le deuxième insert (3) se superpose partiellement au premier insert (2).

4. Structure de support selon l'une quelconque des revendications 1, 2 ou 3, dans laquelle le premier (2) et le deuxième (3) inserts se verrouillent mutuellement de façon à stabiliser le premier et le deuxième insert (2, 3) en place dans la coquille (4).

5. Structure de support selon l'une quelconque des revendications 1, 2, 3 ou 4, dans laquelle le premier insert (2) comprend un matériau de rembourrage pour couvrir la coquille (4) du siège d'enfant (1).

6. Structure de support selon l'une quelconque des revendications 1, 2, 3 ou 4, dans laquelle le deuxième insert (3) comprend une partie appui-dos de deuxième insert (12) et une partie repose-fesses de deuxième insert (13).

7. Structure de support selon la revendication 6, dans laquelle la partie appui-dos de deuxième insert (12) et la partie repose-fesses de deuxième insert (13) comprennent une pluralité de structures bombées vers l'intérieur possédant des surfaces dirigées en écartement de la coquille (4).

8. Structure de support selon la revendication 7, dans laquelle les surfaces bombées forment des surfaces extérieures nervurées.

9. Structure de support selon la revendication 7, dans laquelle les structures bombées sont préformées avant d'être montées dans la coquille (4) en une forme qui se conforme au fait qu'elles soient positionnées à l'intérieur de la coquille (4).

10. Structure de support selon l'une quelconque des revendications 7 à 9, dans laquelle la partie appui-dos de deuxième insert (12) possédant une pluralité de bombages comprend au moins deux bombages supérieurs de support latéral (15, 16) et au moins un bombage médian supérieur (19) qui forme un creux (14).

11. Structure de support selon l'une quelconque des revendications 7 à 9, dans laquelle la partie repose-fesses de deuxième insert (13) possédant une pluralité de bombages comprend au moins deux bombages inférieurs de support latéral (17, 18) et au moins un bombage médian inférieur (20) qui forme un creux (21).

12. Structure de support selon les revendications 10 et 11, dans laquelle le nombre de bombages comprenant les bombages médians inférieurs et supérieurs (19, 20) est de trois, respectivement.

13. Structure de support selon l'une quelconque des revendications 10 à 12, dans laquelle les creux (14, 21) sont centrés sur des surfaces qui sont essentiellement orthogonales.

14. Structure de support selon l'une quelconque des revendications 10 à 13, dans laquelle la première partie supérieure d'insert (8) dépasse dans le creux (14), et le creux (21) de la partie repose-fesses de deuxième insert (13) se superpose à la première partie inférieure d'insert (11).

15. Structure de support selon la revendication 14, dans laquelle la pluralité de bombages procure une action élastique pour supporter la tension lorsque le premier et le deuxième inserts (2, 3) sont verrouillés entre eux.

16. Structure de support selon l'une quelconque des revendications 7 à 11, dans laquelle les bombages sont fournis avec du matériau de remplissage tel que du polystyrène ou les structures bombées comprennent des enveloppes expansibles qui peuvent être gonflées.

17. Structure de support selon l'une quelconque des revendications 7 à 16, dans laquelle les structures bombées sont en communication de fluide.

18. Structure de support selon l'une quelconque des revendications 7 à 17, dans laquelle les structures bombées sont assurées ensemble en utilisant un moyen de fixation.

19. Structure de support selon la revendication 18, dans laquelle le moyen de fixation comprend le piquage, l'adhérence telle que celle procurée par l'usage de Velcro ou un moyen mécanique tel que l'usage de boutons pression, de ressorts, de fermetures éclairs ou de fixations par crochet et oeillet.

20. Structure de support selon la revendication 10, dans laquelle, lorsque le premier et le deuxième inserts (2, 3) sont montés dans le siège pour enfant (1), la première partie supérieure d'insert (8) repose dans le creux (14) de la partie appui-dos de deuxième insert (12) pour verrouiller mutuellement les parties respectives et le au moins un bombage médian supérieur (19) se superpose à la première partie supérieure médiane d'insert (9).

21. Structure de support selon la revendication 11, dans laquelle, lorsque le premier et le deuxième inserts (2, 3) sont montés dans le siège pour enfant (1), la partie repose-fesses de deuxième insert (13) repose sur la première partie inférieure d'insert (11) et le au moins un bombage médian inférieur (20) se superpose à la première partie inférieure médiane d'insert (10).

22. Structure de support selon l'une quelconque des revendications 18 à 21, dans laquelle le deuxième insert (3) peut être ajusté en taille en actionnant le moyen de fixation de manière telle que la hauteur des bombages de support latéral (15, 16) dans la partie appui-dos de deuxième insert (12) soit ajustable relativement à la partie repose-fesses de deuxième insert (13).

23. Structure de support selon l'une quelconque des revendications 18 à 21, dans laquelle le deuxième insert (3) peut être ajusté en taille en actionnant le moyen de fixation de manière telle que la largeur des bombages médians (19, 20) soit ajustable relativement aux bombages de support latéral (15, 16, 17, 18).

24. Structure de support selon l'une quelconque des revendications 18 à 23, dans laquelle le deuxième insert (3) peut être ajusté en taille en actionnant le moyen de fixation de manière telle que la longueur des bombages de support latéral (17, 18) soit ajustable relativement à la partie appui-dos de deuxième insert (12).

25. Structure de support selon l'une quelconque des revendications 11 à 24, dans laquelle le premier insert (2) peut être ajusté pour se conformer au deuxième insert ajustable (3) si bien que la première partie supérieure d'insert (8), les premières parties médianes supérieures et inférieures (19, 20) et le premier insert inférieur (11) sont tous ajustables relativement les uns aux autres.

26. Méthode de réglage de la taille d'un deuxième insert (3) se superposant partiellement à un premier insert (2) positionné sur une coquille (4) d'un siège d'enfant (1) en ajustant la hauteur, la largeur et la longueur de bombages de support latéral (15, 16, 17, 18) et de parties bombées médianes (19, 20), ajustant respectivement et simultanément ainsi également le premier insert (2) en ajustant les parties supérieure (8), médianes (9, 10) et inférieure (11) relativement à ceci pour se conformer aux réglages du deuxième insert (3).
